# EUROPÄISCHE PATENTANMELDUNG

(11) **EP 1 041 104 A2**
(43) Veröffentlichungstag der Anmeldung: **04.10.2000**
(21) Anmeldenummer: 00102338.1
(22) Anmeldetag: 03.02.2000
(51) Int. Cl.: C08J 5/12

(54) **Verbundgegenstand aus Polyester und Silikonkautschuk**

(30) Priorität: 29.03.1999 DE 19914162
(71) Anmelder: Degussa-Hüls Aktiengesellschaft, 60287 Frankfurt am Main (DE)
(72) Erfinder: Grosse-Puppendahl, Thomas, 45721 Haltern (DE); Hellermann, Walter, Dr., 46282 Dorsten (DE)

(57) **Zusammenfassung**

Verbundgegenstände aus einem thermoplastischen Polyester und einem Vulkanisat werden dadurch erhalten, daß das Vulkanisat unter üblichen Vulkanisationsbedingungen im Kontakt mit der harten Komponente durch Vulkanisation einer Kautschukzusammensetzung hergestellt wird, die folgende Komponenten enthält;
I. 100 Gew.-Teile eines Silikonkautschuks,
II. 0 bis 300 Gew. -Teile Füllstoffe,
III. 1 bis 10 Gew.-Teile Vulkanisationsmittel,
IV. 0 bis 4 Gew.-Teile Vulkanisationsaktivatoren,
V. 0 bis 150 Gew.-Teile Weichmacher,
wobei wahlweise die harte und/oder die weiche Komponente zusätzlich 0,25 bis 12 Gew. -Teile eines di- oder polyfunktionellen Maleinimids enthält.

Nach diesem Verfahren wird ein fester Verbund erhalten.

## Beschreibung

Die vorliegende Erfindung betrifft ein Verfahren zur Herstellung von Verbundgegenständen aus mindestens einer harten und mindestens einer weichen Komponente, wobei die harte Komponente auf einem thermoplastischen Polyester basiert und die weiche Komponente ein vulkanisierter Silikonkautschuk ist. Die Erfindung betrifft weiterhin die nach diesem Verfahren erhaltenen Gegenstände.

Verbundgegenstände aus Polyester und einem Vulkanisat sind bereits aus der EP-A-0 683 195 bekannt. Sie werden dort durch ein Verfahren hergestellt, bei dem man eine harte Komponente auf Basis eines thermoplastischen Polyesters verwendet und bei der weichen Komponente von einer Kautschukzusammensetzung ausgeht, die im Kontakt mit der harten Komponente unter üblichen Vulkanisationsbedingungen vulkanisiert wird und folgende Komponenten enthält:
- I.: 100 Gew.-Teile eines Kautschuks,
- II.: 0 bis 300 Gew.-Teile Füllstoffe,
- III.: 1 bis 10 Gew.-Teile peroxidische Vulkanisationsmittel,
- IV.: 0 bis 4 Gew.-Teile Vulkanisationsaktivatoren sowie
- V.: 0 bis 150 Gew.-Teile Weichmacher,
dadurch gekennzeichnet, daß
a) wahlweise die harte und/oder die weiche Komponente zusätzlich 0,5 bis 12 Gew.-Teile eines di- oder polyfunktionellen Maleinimids der allgemeinen Formel 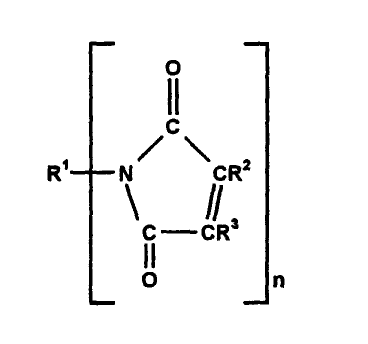 enthält,
   und
b) im Falle, daß die harte Komponente kein di- oder polyfunktionelles Maleinimid enthält, der Kautschuk Carboxyl- oder Säureanhydridgruppen besitzt.

Allerdings hat sich in der Praxis herausgestellt, daß bei den in der EP-A-0 683 195 offenbarten Kautschuken eine relativ hohe Menge des teuren Maleinimids verwendet werden muß, unabhängig davon, ob das Maleinimid der harten oder der weichen Komponente zugesetzt wird.

Somit bestand die Aufgabe darin, ausgehend von der EP-A-0 683 195 Verbundgegenstände zur Verfügung zu stellen, bei deren Herstellung ein geringerer Anteil des Maleinimids benötigt wird.

Die haftvermittlerfreie Verbindung zwischen einem Polyester und Silikonkautschuk wird schon lange gesucht. Der bisher einzige bekannte Ansatzpunkt zur Herstellung solcher Verbunde ist in der DE-OS 195 40 333 beschrieben worden. Bei diesem Verfahren wird das Teilstück der harten Komponente in dem Bereich, in dem die Verbindung mit dem Silikonkautschuk vorgenommen werden soll, mit einem Korona-Verfahren behandelt. Durch die Behandlung des Verbindungsbereiches mittels Korona-Verfahren ist allerdings ein umständlicher Vorbehandlungsschritt eingeschaltet, der dazu führt, daß das Kunststoffteil erst aus der Form genommen werden muß, dann koronabehandelt wird und dann wieder in das Werkzeug eingelegt wird. Damit ist nur ein zweistufiges Verfahren möglich. Weiterhin wird in dieser Anmeldung davon gesprochen, daß der Thermoplast noch zusätzlich haftungsmodifiziert ist; d. h. es muß erst zusätzlich noch ein Haftvermittler manuell aufgetragen werden.

Die obengenannte Aufgabe wurde mit einem Verfahren gelöst, das darin besteht, daß man eine harte Komponente auf Basis eines thermoplastischen Polyesters verwendet und bei der weichen Komponente von einer Kautschukzusammensetzung ausgeht, die im Kontakt mit der harten Komponente unter üblichen Vulkanisationsbedingungen vulkanisiert wird und folgende Komponenten enthält:
I. 100 Gew.-Teile eines Kautschuks,
II. 0 bis 300 Gew.-Teile Füllstoffe,
III. 1 bis 10 Gew.-Teile Vulkanisationsmittel,
IV. 0 bis 4 Gew. -Teile Vulkanisationsaktivatoren sowie
V. 0 bis 150 Gew.-Teile Weichmacher,
wobei wahlweise die harte und/oder die weiche Komponente zusätzlich 0,25 bis 12 Gew.-Teile eines di- oder polyfunktionellen Maleinimids der allgemeinen Formel 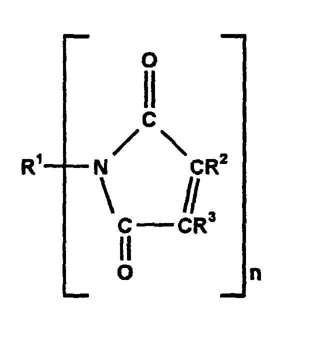 enthält,
wobei R¹ ein beliebiger zwei- oder mehrwertiger Rest oder eine direkte Bindung sein kann, n für eine Zahl größer oder gleich 2, vorzugsweise 2 bis 4, steht, und R² und R³, unabhängig voneinander, Wasserstoff, Alkyl, Cycloalkyl oder Aryl mit jeweils maximal 20 C-Atomen darstellen,
dadurch gekennzeichnet, daß als Kautschuk ein radikalisch vernetzbarer Silikonkautschuk verwendet wird.

Über den hier wirksamen Bindungsmechanismus zwischen Polyester und Vulkanisat liegen noch keine gesicherten Erkenntnisse vor.

Im folgenden sollen die einzelnen Bestandteile der harten und der weichen Komponente näher erläutert werden.

Die harte Komponente auf Basis von Polyester kann ein Polyester, eine Polyesterformmasse, ein Polyesterblend oder ein Faserverbundwerkstoff mit Polyestermatrix sein.

Hierbei wird der thermoplastische Polyester in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl. "Polymer Chemistry", Interscience Publ., New York, 1961, S. 111 - 127; Kunststoffhandbuch, Band VIII, C. Hanser Verlag, München, 1973 und Journal of Polymer Science, Part A1, **4**, Seiten 1851 -1859(1966)].

Hinsichtlich näherer Einzelheiten sei auf die ausdrücklich in Bezug genommene EP-A-0 683 195 verwiesen.

In einer bevorzugten Ausführungsform basiert die Dicarbonsäurekomponente des Polyesters auf Terephthalsäure.

Besonders bevorzugt werden als Polyester Poly(ethylenterephthalat) und Poly(butylenterephthalat) eingesetzt.

Die Wirkung des di- oder polyfunktionellen Maleinimids kann in manchen Fällen noch in gewissem Maße gesteigert werden, wenn der Polyester aliphatische Doppelbindungen enthält. So verwendet man in einer weiteren Ausführungsform Polyester mit einer Dicarbonsäurekomponente auf Basis von Terephthalsäure und einer Diolkomponente, die zu 0 bis 99,9 Mol-% aus Butandiol-(1,4) und zu 0,1 bis 100 Mol-% aus Butendiol-(1,4) besteht. Insbesondere besteht die Diolkomponente aus 50 bis 99 Mol-% Butandiol-(1,4) und 1 bis 50 Mol-% Butendiol-(1,4).

Selbstverständlich kann der eventuell gewünschte Doppelbindungsgehalt des Polyesters dadurch eingestellt werden, daß man eine Mischung eines doppelbindungshaltigen und beispielsweise eines doppelbindungsfreien Polyesters verwendet.

Polyesterformmassen im Sinne dieser Erfindung sind dem Stand der Technik entsprechende Aufbereitungen von Polyestern, die zur Verbesserung der Verarbeitungseigenschaften oder zur Modifizierung der Gebrauchseigenschaften vorgenommen wurden. Polyesterformmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übrigen Zusatzstoffe insgesamt bis zu 10 Gew.-%, jeweils bezogen auf die gesamte Formmasse, betragen.

Polyesterblends im Sinne dieser Erfindung sind Formmassen, die aus Polyestern und anderen Polymeren sowie den bei den Polyesterformmassen gebräuchlichen Additiven zusammengesetzt sind. Die Polymerbestandteile können ineinander löslich sein oder der eine Polymerbestandteil in dem anderen dispers verteilt sein, oder beide können miteinander interpenetrierende Netzwerke bilden.

Im Rahmen der vorliegenden Erfindung kann prinzipiell jedes bekannte Polyesterblend verwendet werden. Als Beispiele seien genannt: PBT/PC- oder PET/PC-Blends, schlagzähmodifizierte Polyester, die als Schlagzähkomponente etwa maleinsäureanhydrid- oder glycidylmethacrylatmodifizierte Kautschuke enthalten, Polyester/Polyamid-Blends, Blends aus Polyestern und Polyolefinen sowie Blends aus Polyestern und PMMA, PMMI, ABS, Epoxyharzen oder Blockcopolyetherester-Elastomeren. Beschrieben sind derartige Systeme beispielsweise in folgenden Publikationen: Polymer Blends, Ed.: E. Martus-celli, R. Palumbo und M. Kryszewski, Plenum Press, New York, 1980; Polymer Alloys III, Ed.: D. Klempner und K C. Frisch, Plenum Press, New York, 1983; WO-A-87/00850; EP-A-0 037 547; EP-A-0 276 327 sowie H. Saechtling, Kunststoff-Taschenbuch, 25. Auflage, C. Hanser Verlag, München, Wien, 1992.

Der Polyesteranteil in den Polyesterblends sollte hierbei, bezogen auf die Summe aller polymeren Komponenten, mindestens 30 Gew.-% betragen.

Als Faserverbundwerkstoffe mit Polyestermatrix sollen Werkstoffe verstanden werden, die aus ungeschnittenen Verstärkungsfasern oder Geweben daraus einerseits und einer Matrix aus Polyestern, Polyesterformmassen oder Polyesterblends andererseits zusammengesetzt sind.

Faserverbundwerkstoffe mit einer Matrix aus Polyestern, Polyesterformmassen oder Polyesterblends können auf verschiedene Weise hergestellt werden; beispielsweise können mit Polyestern imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyesterfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Der verwendete Kautschuk ist ein radikalisch vernetzbarer Silikonkautschuk.

Entsprechend den unterschiedlichen Vulkanisationsbedingungen lassen sich die Silikonkautschuke im wesentlichen in vier Klassen einteilen:
- Einkomponentige, bei Raumtemperatur vernetzende Kautschuke
- Zweikomponentige, bei Raumtemperatur vernetzende Kautschuke
- Flüssig-Silikonkautschuk
- Silikon-Kautschukmischungen für Heißvulkanisate

Die Flüssig-Silikonkautschuke werden auf Spritzgießmaschinen verarbeitet, wie sie für die Verarbeitung von Thermoplasten üblich sind. Der Kautschuk besteht aus zwei Komponenten, die in der Regel im Verhältnis 1: 1 kalt gemischt und in die heiße Form gespritzt werden.

Für die erfindungsgemäßen Polyesterverbunde werden im wesentlichen Flüssig-Silikonkautschuk oder Silikon-Kautschukmischungen für Heißvulkanisate verwendet, da sich diese Kautschukmischungen mit den üblichen Peroxiden vernetzen lassen. Im Zweifelsfalle ist den Herstellerangaben zu folgen oder die Eignung eines bestimmten Typs anhand eines Routineversuchs zu überprüfen.

Als Füllstoffe eignen sich alle Stoffe, die üblicherweise in Kautschuken eingesetzt werden, wie z. B. Ruß, Kieselsäure, Silikate, Calciumcarbonat usw.

Als Vulkanisationsmittel werden bevorzugt peroxidische Verbindungen eingesetzt, da diese die größte Anwendungsbreite haben.

Geeignete peroxidische Vulkanisationsmittel sind die dem Fachmann zur Vernetzung von Kautschuken bekannten Peroxide wie z. B. 2,5-Dimethyl-2,5-bis(tert.-butylperoxy)-hexan, Dicumylperoxid, 4,4-Di-tert.-butylperoxy-n-butylvalerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre 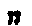 Handbuch für die Gummiindustrie" der Bayer AG zu entnehmen.

Als Weichmacher und Vulkanisationsaktivatoren können alle diejenigen verwendet werden, die bei Silikonkautschuken üblich sind. Im Zweifelsfalle sollte den Empfehlungen der Kautschukhersteller gefolgt werden.

Die Kautschukzusammensetzungen können darüber hinaus weitere Zusätze enthalten, wie z. B. Vulkanisationsverzögerer, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 50 Gew.-Teile aus.

Das Maleinimid kann z. B. 1,3-Phenylen-bismaleinimid, 1,4-Phenylen-bismaleinimid, 3-Methyl-1,4-phenylen-bismaleinimid, 5-Methyl-1,3-phenylen-bismaleinimid, 4,4'-(N,N'-Bismaleinimido)-diphenylmethan, 2,4-Bismaleinimidotoluol, 3,3'-(N,N'-Bismaleinimido)-diphenylmethan, 3,3'-(N,N'-Bismaleinimido)-diphenylsulfon, 4,4'-(N,N'-Bismaleinimido)-diphenylsulfon, 1,2-Ethylen-bismaleinimid, 1,3-Propylen-bismaleinimid, 1,4-Butylen-bismaleinimid, 1,10-Decen-bismaleinimid, 1,12-Dodecen-bismaleinimid u. ä. sein. Es können auch Gemische verschiedener Maleinimide eingesetzt werden.

Bevorzugt sind Bismaleinimide mit einem aromatischen Rest R¹, besonders bevorzugt sind 1,3-Phenylen-bismaleinimid, 2,4-Bismaleinimidotoluol, 4,4'-(N,N'-Bismaleinimido)-diphenylmethan und 1,3-Bis(citraconimidomethyl)benzol.

Vom Maleinimid werden bevorzugt 0,3 bis 8 Gewichtsteile und besonders bevorzugt 0,5 bis 6 Gewichtsteile eingesetzt, bezogen jeweils auf 100 Gew.-Teile Kautschuk oder Polyester.

Das Maleinimid kann durch übliche Schmelzemischung in die Thermoplastkomponente eingearbeitet werden, beispielsweise mit Hilfe eines Zweiwellen- oder Buss-Co-Kneters. Es kann aber auch auf bekannte Weise in die Kautschukzusammensetzung eingemischt werden. In einer weiteren möglichen Ausführungsform wird es sowohl in die Thermoplastkomponente als auch in die Kautschukzusammensetzung eingearbeitet.

Der Verbund aus der harten Komponente auf Polyesterbasis und der elastomeren Komponente wird durch Vulkanisation des Kautschuk-Compounds im Kontakt mit der harten Komponente hergestellt.

Die Gegenstände aus den Polyestern, Polyesterformmassen oder Polyesterblends einerseits und Kautschuk-Compounds andererseits können hierbei einstufig oder zweistufig hergestellt werden. Gegenstände aus Faserverbundwerkstoffen und Kautschuk-Compounds werden zweistufig hergestellt.

Beim zweistufigen Prozeß wird zunächst das steife Formteil beispielsweise durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Beim Beaufschlagen und Ausvulkanisieren nach dem zweistufigen Extrusionsverfahren wird z. B. ein in der ersten Stufe hergestelltes Profil aus dem Thermoplasten, etwa ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Extrusionsverfahren wird der Verbundkörper durch Coextrusion von Thermoplast und Kautschukmasse hergestellt und anschließend vulkanisiert. Derart hergestellte Verbundprofile können beispielsweise für Dichtungszwecke verwendet werden.

Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des Polyesters, der Polyesterformmasse bzw. des Polyesterblends liegen sollte.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen, denn das zugesetzte Maleinimid beeinflußt die Reaktionsbedingungen nicht wesentlich.

Geeignete Massetemperaturen der Kautschukmischung im Zylinder liegen im allgemeinen im Bereich von 20 bis 80 °C, vorzugsweise von 60 bis 70 °C.

Geeignete Vulkanisationstemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Das erfindungsgemäße Verfahren sowie die damit hergestellten Verbunde zeichnen sich durch folgende Vorteile aus:
- Der Verbund ist vorzugsweise in wenigen Minuten hergestellt.
- Die im Verbundsystem eingesetzten Polyester besitzen eine hohe Wärmeformbeständigkeit, gute Lösemittelbeständigkeit, ein ausgezeichnetes Gleitreibungsverhalten sowie eine nur geringe Wasseraufnahme und sind auch im Außenbereich problemlos einsetzbar.
- Der Verbund ist so stark, daß es im Testfall in der Regel zu einem Kohäsionsbruch im Gummi, nicht jedoch zu einer Trennung an der Phasengrenzfläche kommt.

Diese neue Hart-Weich-Verbindung ermöglicht die Konstruktion sehr kompakter Bauteile für vielseitige Anwendungen. Neben Kupplungen und Motorhaltern bieten sich Elemente mit zusätzlichen Dichtaufgaben an. Die Kombination von Polyester und Silikonkautschuk verfügt über ein deutlich höheres Leistungsspektrum. Durch die Verwendung von Silikonkautschuk kann die elastische Komponente in einem Temperaturbereich von -50 °C bis +200 °C (kurzzeitig auch bis 250 °C) nahezu ohne Beeinträchtigung der mechanischen Eigenschaften eingesetzt werden. Aus der hohen Wärme-, Ozon- und Lichtbeständigkeit resultiert gegenüber allen anderen Elastomeren eine längere Lebensdauer der hochelastischen Eigenschaften. Somit ist ein Einsatz der erfindungsgemäßen Verbunde überall dort möglich, wo hohe Temperaturbeständigkeit und hohe Bewitterungsstabilität bei gleichbleibenden physikalischen Eigenschaften gefordert werden.

Aus den Verbunden lassen sich beispielsweise folgende Gegenstände herstellen: gummibeschichtete Walzen, Flansche, Rohr- und Schlauchkupplungen, Dichtungsrahmen, stoß- und strahlungsabsorbierende Bauteile, Federelemente, Schwingungsdämpfer, verstärkte Gummiprofile, Transportbänder, Antriebsriemen, Andruckrollen für Video- und Audio-Band-Geräte, Dichtungen, insbesondere Wellendichtringe, Laufrollen, Kupplungs- und Bremsscheiben, Membranen, Kolben mit Dichtringen, verstärkte Faltenbälge, Pumpengehäuse und -klappen, polyesterverstärkte Gummischläuche etc.

Im folgenden soll die Erfindung beispielhaft erläutert werden.

### Beispiele

Für die Herstellung der Polyesterformmassen wurden folgende Materialien verwendet:
- VESTODUR 1000:: Ein Homopolybutylenterephthalat der Degussa-Hüls AG, D-45764 Marl
- VESTODUR GF 30:: Glasfaserverstärktes VESTODUR 1000 mit einem Gewichtsanteil von 30 % Schnittglasfasern (Degussa-Hüls AG, D-45764 Marl)
- HVA 2:: m-Phenylen-bismaleinimid der Fa. DuPont, Wilmington, Delaware, USA
- Perkalink 900:: 1,3-Bis(citraconimidomethyl)benzol der Fa. Flexys Additive für die Kautschukindustrie GmbH & Co. KG, D-52349 Düren
- BDMA:: Butandioldimethacrylat, 75 % auf Ca-Silikat der Fa. Lehmann & Voss

Für die Herstellung von Kautschukmischungen wurden folgende Materialien verwendet:
- BUNA EP G 6170:: ein statistischer EPDM-Kautschuk mit niedriger Ungesättigtheit, Mooney-Viskosität von ML (1 + 4) 125 °C = 59, Bayer AG, D-51368 Leverkusen
- BUNA EP G 5450:: ein statistischer EPDM-Kautschuk mit mittlerer Ungesättigtheit mit einer Mooney-Viskosität von ML (1 + 4)125 °C = 46, Bayer AG, D-51368 Leverkusen
- Durex 0:: Ruß der Firma Degussa-Hüls AG mit einem CTAB-Wert von 20 m²/g
- Sillitin Z 86:: Aluminiumsilikat der Fa. Hoffmann Mineral, Neuburg/Donau, mit einer spezifischen Oberfläche von ungefähr 14 m²/g
- Sunpar 150:: paraffinisches Öl mit 14,1 % Aromaten der Fa. Sun Oil, Belgien
- Sunpar 2280:: paraffinisch (73 %)-naphthenisch (23 %)-aromatisches (4 %) Öl der Fa. Sun Oil, Belgien
- ZnO:: Zinkoxid der Fa. Lehmann & Voss, Hamburg
- ZnO, RS:: Zinkoxid, Rotsieget der Fa. Lehmann & Voss, Hamburg
- Vulkanox HS:: polymerisiertes 2,2,4-Trimethyl-1,2-dihydrochinolin der Fa. Rhein-Chemie, Rheinau
- Dynasylan MEMO:: Methacryl-oxypropyl-trimethoxysilan der Fa. Degussa-Hüls AG, Marl
- Perkadox 14/40:: Bis-tert.-butylperoxy-isopropylbenzol 40%ig auf Kreide und SiO₂ der Fa. Akzo Chemicals, D-52349 Düren

Elastosil R 701/40 S, Elastosil R 701/80 S, Elastosil R 420/70 S und Elastosil R 420/40 S:
Mischungen hochmolekularer Polydiorganosiloxane und verstärkender Füllstoffe. Elastosil ist der Markenname für Silikonkautschuke der Fa. Wacker-Chemie GmbH, Burghausen.

### Herstellung von Polyesterformmassen

Die Herstellung erfolgte in einem Werner & Pfleiderer ZSK 30 M9/1-Kneter mit Standardschneckenkonfiguration bei 250 °C.

### Herstellung der Kautschukmischungen

Die Herstellung der einzelnen Kautschukmischungen erfolgte auf einer Laborwalze. Durch die Friktion der Walzen wurde der Kautschuk zunächst plastifiziert. Innerhalb von etwa fünf Minuten wurden die übrigen Komponenten eingearbeitet (mit Ausnahme des Vulkanisationssystems) und weitere drei Minuten homogenisiert Diese Vormischung wurde anschließend mindestens 24 Stunden bei Raumtemperatur gelagert. Anschließend wurde bei gleichen Bedingungen das peroxidische Vulkanisationssystem innerhalb von ca. zwei Minuten unterhalb der Zersetzungstemperatur des Peroxids homogen eingearbeitet.

### Herstellung der Verbunde

Von den untersuchten Polyester-Formmassen wurden Prüfkörper (100 x 100 x 4 mm) im Spritzgießverfahren bei einer Zylindertemperatur von 250 °C hergestellt. Anschließend wurde eine Plane in eine Form aus V2A-Stahl (100 x 100 x 8 mm) gelegt und mit einem 20 mm breiten Stück PTFE-Folie an einer Seite abgedeckt. Die Gesamtfläche wurde mit der zu prüfenden Kautschukmischung bedeckt. Die so präparierte Platte wurde in einer hydraulischen Presse (Schwabenthan - Polystat 200T) 20 Minuten bei 180 °C und 200 bar verpreßt.

### Prüfung der Verbundhaftung

Die Prüfung der Verbundhaftung zwischen Polyestermaterial und vulkanisiertem Kautschuk wurde mittels eines Schälversuches in Anlehnung an DIN 53 531 durchgeführt. Dabei wurde das Gummiteil, das durch die Teflonfolie bei der Vulkanisation vom Polyestermaterial getrennt gehalten wurde, so eingespannt, daß bei den Schälversuchen der Gummistreifen senkrecht zu der Thermoplastfläche abgezogen wurde. Die Ergebnisse sind in den Tabellen 2 und 4 wiedergegeben, wobei die Beurteilung folgendermaßen vorgenommen wurde:

Eine in den Tabellen angegebene Zahl, z. B. 50, beschreibt den Anteil an kohäsiver Haftung. 100 bedeutet in diesem Fall vollständige kohäsive Haftung; d. h. beim Schälversuch tritt ein Bruch im Kautschuk auf (hohe Trennkraft).

Eine Zahl kleiner als 100 beschreibt den prozentualen Anteil an kohäsivem Bruch. Für den Rest der Bruchfläche liegt eine starke adhäsive Haftung vor. 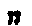 ad" bedeutet adhäsive Haftung (Bruch an der Phasengrenzfläche) mit mittlerer Trennkraft. 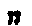 0" bedeutet keine Haftung, d. h. in diesem Fall liegt auch keine adhäsive Haftung und somit keine Trennkraft vor.

Alle Versuche sind in den Tabellen 1 bis 4 wiedergegeben.

Bei den erfindungsgemäßen Versuchen mit Silikonkautschuk-Mischungen (Beispiele 2 bis 8) fällt auf, daß zum Erzielen einer guten Haftung generell deutlich geringere Additivmengen als für EPDM-Kautschuk (Beispiele 9 bis 13) notwendig sind. Ohne Additiv wird aber auch hier keinerlei kohäsive oder adhäsive Haftung erzielt.

**Tabelle 1**

| Zusammensetzung der Silikonkautschuk-Mischungen (in Gewichtsteilen) | | | | |
|---|---|---|---|---|
| | A | B | C | D |
| Elastosil R 701/40 S | 97,00 | 43,00 | | |
| Elastosil R 701/80 S | | 54,00 | | 97,00 |
| Elastosil R 420/70 S | | | 58,00 | |
| Elastosil R 420/40 S | | | 39,00 | |
| Ruß | 1,00 | 1,00 | 1,00 | 1,00 |
| Dicumylperoxid | 2,00 | 2,00 | 2,00 | 2,00 |

**Tabelle 2**

| Haftungsergebnisse zwischen Polyesterformmassen und unterschiedlichen Silikonkautschuk-Mischungen (%-Angaben sind Gew.-% bezogen auf Polyester) | | | | | | | |
|---|---|---|---|---|---|---|---|
| | Polyester-Formmassen | | | Kautschukmischungen | | | |
| Beispiel | Polyester | Maleinimid | % | A | B | C | D |
| 1 | VESTODUR 1000 | HVA 2 | 0,25 | 10 | 0 | 0 | 0 |
| 2 | VESTODUR 1000 | HVA 2 | 0,50 | 90 | 0 | 0 | 0 |
| 3 | VESTODUR 1000 | HVA 2 | 0,75 | 100 | 75 | 60 | 75 |
| 4 | VESTODUR 1000 | HVA 2 | 1,00 | 100 | 100 | 100 | 95 |
| 5 | VESTODUR 1000 | HVA 2 | 0,50 | 100 | 100 | 100 | 100 |
| | | + Perkalink 900 | 2,00 | | | | |
| 6 | VESTODUR GF 30 | HVA 2 | 0,75 | 100 | 100 | 40 | 100 |
| | | + Perkalink 900 | 1,00 | | | | |
| 7 | VESTODUR GF 30 | HVA 2 | 1,00 | 100 | 100 | 65 | 100 |
| | | + Perkalink 900 | 1,00 | | | | |
| 8 | VESTODUR GF 30 | HVA 2 | 2,00 | 100 | 100 | 100 | 100 |
| | | + Perkalink 900 | 2,00 | | | | |

**Tabelle 3**

| Zusammensetzung der EPDM-Mischungen (in Gewichtsteilen) | | |
|---|---|---|
| | E | F |
| BUNA EP G 6170 | 100,00 | |
| BUNA EP G 5450 | | 100,00 |
| Durex O | 100,00 | |
| Sillitin Z 86 | | 100,00 |
| Sunpar 150 | 30,00 | |
| Sunpar 2280 | | 25,00 |
| ZnO | | 5,00 |
| ZnO, RS | 5,00 | |
| Vulkanox HS | 2,00 | 1,00 |
| Dynasylan MEMO | 2,00 | |
| BDMA | | 1,50 |
| Perkadox 14/40 | 7,50 | 6,00 |

**Tabelle 4**

| Zum Vergleich: Haftungsergebnisse zwischen Polyesterformmassen und unterschiedlichen EPDM-Kautschukmischungen (%-Angaben sind Gew. -% bezogen auf Polyester) | | | | | |
|---|---|---|---|---|---|
| | Polyester-Formmassen | | | Kautschukmischungen | |
| Beispiel | Polyester | Maleinimid | % | E | F |
| 9 *) | VESTODUR 1000 | HVA 2 | 0,25 | 0 | 0 |
| 10 *) | VESTODUR 1000 | HVA 2 | 0,50 | 0 | 0 |
| 11 *) | VESTODUR 1000 | HVA 2 | 0,75 | 0 | 0 |
| 12 *) | VESTODUR 1000 | HVA 2 | 1,00 | 0 | 0 |
| 13 *) | VESTODUR 1000 | HVA 2 + Perkalink 900 | 0,50 2,00 | ad | 0 |

| | | | | | |
|---|---|---|---|---|---|
| *) nicht erfindungsgemäß | | | | | |

## Patentansprüche

1. Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist, welches unter üblichen Vulkanisationsbedingungen im Kontakt mit der harten Komponente durch Vulkanisation einer Kautschukzusammensetzung hergestellt wird, die folgende Komponenten enthält:
I. 100 Gew. -Teile eines Kautschuks,
II. 0 bis 300 Gew.-Teile Füllstoffe,
III. 1 bis 10 Gew.-Teile Vulkanisationsmittel,
IV. 0 bis 4 Gew.-Teile Vulkanisationsaktivatoren,
V. 0 bis 150 Gew.-Teile Weichmacher,
und wahlweise die harte und/oder die weiche Komponente zusätzlich 0,25 bis 12 Gew.-Teile eines di- oder polyfunktionellen Maleinimids der allgemeinen Formel 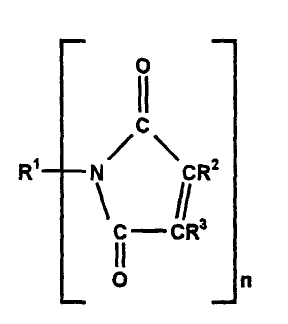 enthält,
wobei R¹ ein beliebiger zwei- oder mehrwertiger Rest oder eine direkte Bindung sein kann, n für eine Zahl größer oder gleich 2 steht, und R² und R³, unabhängig voneinander, Wasserstoff, Alkyl, Cycloalkyl oder Aryl mit jeweils maximal 20 C-Atomen darstellen,
dadurch gekennzeichnet,
daß als Kautschuk ein radikalisch vernetzbarer Silikonkautschuk verwendet wird.

2. Verfahren gemäß Anspruch 1,
dadurch gekennzeichnet,
daß die harte Komponente ein Polyester, eine Polyesterformmasse, ein Polyesterblend oder ein Faserverbundwerkstoff mit Polyestermatrix ist.

3. Verfahren gemäß einem der vorhergehenden Ansprüche,
dadurch gekennzeichnet,
daß die Dicarbonsäurekomponente des thermoplastischen Polyesters auf Terephthalsäure basiert.

4. Verfahren gemäß einem der vorhergehenden Ansprüche,
dadurch gekennzeichnet,
daß das Vulkanisationsmittel ein Peroxid ist.

5. Verfahren gemäß einem der vorhergehenden Ansprüche,
dadurch gekennzeichnet,
daß die Kautschukzusammensetzung darüber hinaus Vulkanisationsverzögerer, Alterungsschutzmittel, Verarbeitungshilfsmittel, Entformungsmittel und/oder Treibmittel enthält.

6. Verfahren gemäß einem der vorhergehenden Ansprüche,
dadurch gekennzeichnet,
daß als di- oder polyfunktionelles Maleinimid ein Bismaleinimid mit einem aromatischen Rest R¹ eingesetzt wird.

7. Verfahren gemäß einem der vorhergehenden Ansprüche,
dadurch gekennzeichnet,
daß das di- oder polyfunktionelle Maleinimid zu 0,3 bis 8 Gew.-Teilen und bevorzugt zu 0,5 bis 6 Gew.-Teilen eingesetzt wird.

8. Verfahren gemäß einem der vorhergehenden Ansprüche,
dadurch gekennzeichnet,
daß der Verbund im einstufigen oder im zweistufigen Prozeß hergestellt wird, wobei die Massetemperatur der Kautschukmischung im Zylinder im Bereich zwischen 20 und 80 °C und die Vulkanisationstemperatur im Bereich zwischen 140 und 200 °C liegen.

9. Verbundgegenstand, hergestellt nach einem der vorhergehenden Ansprüche.
